# EUROPÄISCHE PATENTANMELDUNG

(11) **EP 1 671 538 A1**
(43) Veröffentlichungstag der Anmeldung: **21.06.2006**
(21) Anmeldenummer: 05024318.7
(22) Anmeldetag: 08.11.2005
(51) Int. Cl.: A01K 5/00

(54) **Vorrichtung zum Mischen und Ausbringen**

(30) Priorität: 20.12.2004 DE 202004019634 U
(71) Anmelder: Trioliet Mullos B.V., 7570 AC Oldenzaal (NL)
(72) Erfinder: Van der Plas, Nicolaas, 7576 WX Oldenzaal (NL)
(74) Vertreter: Grünecker, Kinkeldey, Stockmair & Schwanhäusser Anwaltssozietät

(57) **Zusammenfassung**

Eine Vorrichtung zum Mischen und Ausbringen weist einen Behälter (1) auf, in dem auf dem Boden ein drehangetriebenes Mischorgan (S) vorgesehen und in der Behälterwand eine Ausgabeöffnung (3) angeordnet ist, die in Drehrichtung des Mischorgans aufeinanderfolgende erste und zweite Öffnungsränder (12, 13) aufweist, wobei im Bereich der Ausgabeöffnung ein drehantreibbares Hilfsförderglied (H) und gegebenenfalls vor der Außenseite eine weitere Fördereinrichtung (F) vorgesehen sind. Das Hilfsförderglied (H) ist mit annähernd vertikaler Achse (X) von der Außenseite der Ausgabeöffnung (3) her dem zweiten Öffnungsrand (12) zugeordnet.

## Beschreibung

Die Erfindung betrifft eine Vorrichtung der im Oberbegriff des Anspruchs 1 angegebenen Art.

Solche Vorrichtungen werden stationär oder mobil unter anderem in der Landwirtschaft oder bei Bioreaktoren eingesetzt. Eine gängige Bezeichnung ist Vertikalmischer oder Vertikal-Mischwagen. Eine einzelne solche Vorrichtung ist sogar universell für unterschiedliche Güter, z. B. als Feststoff-Dosieranlage in einer Biogasanlage, in Kombination mit einem Gebläse zum Strohstreuen oder Einstreuen von Potställen, für Tierfutter, und dgl. nutzbar. Auch zur Verarbeitung von schwerem und klebrigem Stallmist werden solche Vorrichtungen verwendet, oder zum komprimierten Beschicken von im Boden versenkten Fermentern.

Im Übergang von der Mischkammer zur in und stromab der Austragöffnung entstehen aufgrund der geometrischen Verhältnisse oftmals sogenannte tote Ecken, in denen sich von dem langsam rotierenden Mischorgan gefördertes Mischgut festsetzen kann. Es entsteht manchmal eine solide Brücke aus dem Mischgut, so dass der Austragvorgang zum Stillstand kommt oder eine gewünschte Dosierwirkung nicht oder nicht mehr erzielt wird. Dies gilt für Vorrichtungen, bei denen der Austrag direkt aus der Austragöffnung erfolgt, oder bei denen ein der Austragöffnung weitere Fördervorrichtungen wie ein Strohgebläse oder ein Bandförderer oder ein Schneckenförderer vorgesehen sind.

Die aus EP 0 527 428 A bekannte Vorrichtung weist in einem vor der Austragöffnung montierten, nach unten offenen Schacht ein um eine stationäre horizontale Achse drehbares Hilfsförderglied auf, das das Mischgut auf darunterliegende Streuscheiben fördert. Das Hilfsförderglied stellt ein unzweckmäßiges Hindemis im Förderweg dar und ist nicht in der Lage, Mischgutansammlungen in den toten Ecken zu verhindern, vor allem nicht in der toten Ecke im Bereich des zweiten öffnungsrandes, gegen den das Mischorgan das Mischgut mit Nachdruck fördert.

Die aus EP 0 754 405 A bekannte Vorrichtung weist an der Decke eines vor der Austragöffnung angeordneten Schachtes eine Schwenklagerung für eine pendelartige Tragkonstruktion auf, an der mit horizontaler Drehachse das Hilfsförderglied drehbar gelagert ist. Hydraulikzylinder ermöglichen es, die pendelartige Tragkonstruktion bis in die Austragöffnung zu verlagem. Jedoch bildet das Hilfsförderglied in dieser Anordnung ein unerwünschtes Hindemis im Förderweg, und ist die Einflussnahme des Hilfsfördergliedes auf Mischgutansammlungen in den toten Ecken, vor allem in der toten Ecke im Bereich des zweiten Öffnungsrandes unbefriedigend.

Weiterer Stand der Technik ist enthalten in EP 0 404 028 A.

Der Erfindung liegt die Aufgabe zugrunde, eine Vorrichtung der eingangs genannten Art dahingehend zu verbessem, dass unabhängig von der Mischgutart Ansammlungen im Förderweg durch die Austragöffnung vermieden und ein gleichmäßiger Austrag erzielt werden.

Die gestellte Aufgabe wird mit den Merkmalen des Anspruchs 1 gelöst.

Das Hilfsförderglied befindet sich mit seiner annähernd vertikalen Achse direkt bei dem Bereich der toten Ecke am zweiten Öffnungsrand und füllt sozusagen die tote Ecke aus, so dass dort keine Mischgutansammlung entsteht. Das angetriebene Hilfsförderglied hält diese tote Ecke frei und fördert das Mischgut zügig durch die Austragöffnung. Es lässt sich ein gleichmäßiger Austrag mit einer gewünschten Dosierwirkung erzielen, was sowohl für einen direkten Austrag ohne nachgeschaltete Fördereinrichtungen als auch für die Effizienz nachgeschalteter Fördereinrichtungen vorteilhaft ist. Hierbei arbeitet das Hilfsförderglied nicht nur in einem Teil des Höhenbereichs der Austragöffnung, sondern praktisch über die gesamte Höhe der Austragöffnung, so dass sich unabhängig davon, wie viel Mischgut das Mischorgan pro Zeiteinheit zur Austragöffnung liefert, ein gleichförmiger, dosierter Förderstrom nach außen ergibt.

Zweckmäßig ist das Hilfsförderglied eng benachbart zum zweiten Öffnungsrand platziert. Vorzugsweise erstreckt es sich zumindest annähernd parallel zu dem Öffnungsrand. Dadurch entwickelt das Hilfsförderglied eine gute Effizienz beim Übernehmen und Weiterfördem des Mischguts, das vom Mischorgan bereitgestellt wird, und kann sich kein Mischgut an dem kritischen zweiten Öffnungsrand festlegen.

Zweckmäßig werden das Mischorgan und das Hilfsförderglied mit gleichen Drehrichtungen angetrieben, so dass das Hilfsförderglied den ankommenden Mischgutstrom zügig umlenkt und nach außen bringt.

Bei einer zweckmäßigen Ausführungsform hat das Hilfsförderglied einen langgestreckten, vorzugsweise walzenförmigen Grundkörper mit äußeren MitnehmerStrukturen, die in vorbestimmter Weise mechanisch auf das Mischgut einwirken. Der Grundkörper könnte profiliert sein oder Leisten tragen oder andere Mitnehmer oder Schneckenlinte jeder Art, oder Abstreifer, Raufen oder dgl. Es wären sogar gegensinnige Schneckengänge am Grundkörper möglich, die Mischgut von den oberen und unteren Austragöffnungen wegnehmen und in einem Mittelbereich der Austragöffnung konzentriert nach außen fördem.

Die axiale Länge des Hilfsfördergliedes sollte zumindest in etwa der Länge des zweiten Öffnungsrandes entsprechen, damit an keiner Stelle Mischgutansammlungen auftreten können und der mechanische Eingriff des Hilfsfördergliedes bei Bedarf über die gesamte Höhe der Austragöffnung erfolgt.

Grundsätzlich wird die Förderwirkung bereits erheblich verbessert, wenn das Hilfsförderglied an der richtigen Stelle stationär montiert ist. Vorteilhaft ist jedoch das Hilfsförderglied sogar um eine zur Achse in zumindest im Wesentlichen parallele, an der Ausgabeöffnungs-Außenseite angeordnete Stellachse schwenkverstellbar. Hierdurch lässt sich das Hilfsförderglied zwischen Schwenklagern außerhalb der Ausgabeöffnung und Schwenklagen verstellen, in denen das Hilfsförderglied durch die Ausgabeöffnung in den Behälter eingreift. Je nach Mischgutart kann eine andere Schwenklage des Hilfsförderglieds zweckmäßig sein. Ferner kann das Hilfsförderglied sogar während des Austrags verstellt werden.

Damit das Hilfsförderglied nicht mit dem bodenseitigen außenliegenden Teil des Mischorgans kollidiert, wenn es mit Eingriff in den Behälter das Mischgut übemimmt, ist es zweckmäßig, dass entweder ein unteres Ende und/der Mitnehmerstrukturen des Hilfsförderglieds oberhalb der Umlaufbahn des bodenseitigen außenliegenden Teils des Mischorgans angeordnet ist bzw. sind.

Der Wirkdurchmesser des Hilfsfördergliedes kann zwischen etwa 20 % und 40 % der Innenweite der Ausgabeöffnung betragen. Dies kann vor allem bei einem Streugebläse zweckmäßig sein, weil dann das Hilfsförderglied nicht nur das Streugut zügig durch die Austragöffnung fördert, sondern auch zur Regulierung des Ansaugdrucks beitragen kann.

Der Antrieb des Hilfsförderglieds kann ein Hydromotor oder ein Elektromotor sein, der entweder mit festgelegter oder variabler Drehzahl betrieben wird.

Besonders zweckmäßig wird das Hilfsförderglied an Schwingen gelagert, von denen eine den Antrieb trägt, und die an einer stationären Stellachse angelenkt und durch einen Schwingen-Stellantrieb verstellbar sind, um die Schwenklage des Hilfsfördergliedes zu variieren.

Der Schwingen-Stellantrieb kann manueller Art sein oder einen eigenen Hydro- oder Elektromotor oder einen Hydraulikzylinder aufweisen. Die Verstellbarkeit der Schwingen ermöglicht es, die jeweils optimale Arbeitsposition des Hilfsförderglieds, z.B. abhängig von der Mischgutart, komfortabel einstellen zu können.

Bei einer zweckmäßigen Ausführungsform ist der Schwingen-Stellantrieb funktionell mit dem Antrieb des Hilfsförderglieds gekoppelt. Dies kann beispielsweise derart realisiert sein, dass in Abhängigkeit vom Hydraulikstrom oder elektrischen Strom zum Antreiben des Hilfsförderglieds das Hilfsförderglied weiter in Richtung zum Mischorgan oder von diesem weg verstellt wird, sobald der Fördewiderstand des Hilfsfördergliedes einen vorbestimmten Grenzwert über- oder unterschreitet. Auf diese Weise wird automatisch eine optimale Förderung des Mischguts durch die Austragöffnung eingestellt.

Zweckmäßig stellt das Hilfsförderglied mit seinem Antrieb und seiner Lagerung einen Nachrüst-Bausatz dar, mit dem bereits im Betrieb gewesene Vorrichtungen im Hinblick auf eine verbesserte und vergleichmäßigte Förderung nachrüstbar sind.

Eine zweckmäßige Ausführungsform der Vorrichtung, mit der das Mischgut direkt und ohne weitere Fördereinrichtungen ausgetragen wird, zeichnet sich dadurch aus, dass das Hilfsförderglied eine Ausgabe- und Dosierstufe für den direkten Austrag bildet.

Bei einer anderen, zweckmäßigen Ausführungsform der Vorrichtung, die mit einem Streugebläse kombiniert ist, bildet das Hilfsförderglied eine Übergabe- und Dosierstufe für das Streugebläse.

Bei einer weiteren, zweckmäßigen Ausführungsform einer Vorrichtung, die mit einem Schneckenförderer ausgestattet ist, bildet das Hilfsförderglied eine Übergabe- und Kompressionsstufe für den Schneckenförderer.

In jedem Fall hat das Hilfsförderglied den positiven Effekt, Störungen bei der Förderung auch schwer zu verarbeitender Mischgüter zu vermeiden, eine zusätzliche Dosierwirkung zu erzeugen, und den Benutzer, normalerweise den Landwirt im Hinblick auf Reinigungs- oder Behebungsarbeiten mit Zeitverlusten zu entlasten.

Ausführungsformen des Erfindungsgegenstandes werden anhand der Zeichnung erläutert Es zeigen:
- Fig. 1: eine Perspektivansicht einer Vorrichtung zum Mischen und Ausbringen, hier in Form eines sogenannten Mischwagens, der mit einem Streugebläse ausgerüstet ist,
- Fig. 2: eine Perspektivansicht eines Teils der Vorrichtung von Fig. 1, wobei abdeckende Gehäuseteile der Klarheit wegen weggelassen sind,
- Fig. 3: eine perspektivische Innenansicht einer anderen Vorrichtung, beispielsweise zum Direktaustrag ohne zusätzliche Fördereinrichtungen, und
- Fig. 4: eine Perspektivansicht einer weiteren Ausführungsform einer beispielsweise stationären Vorrichtung.

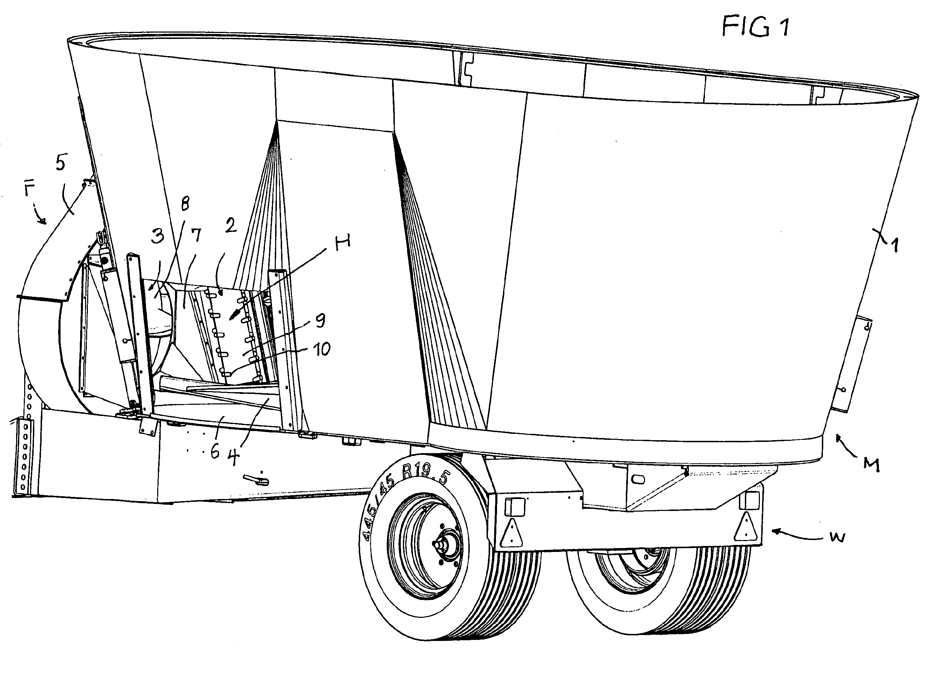

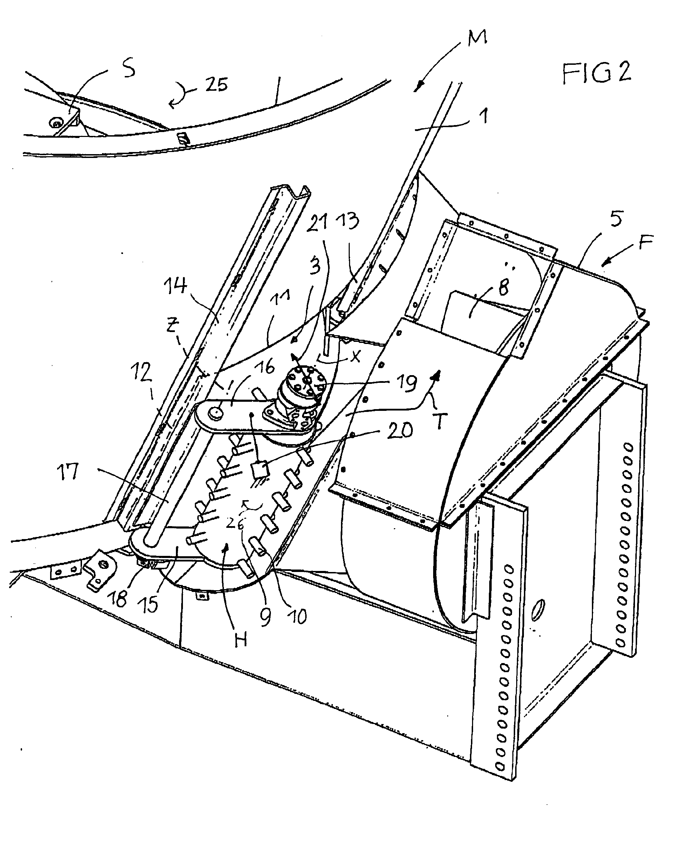

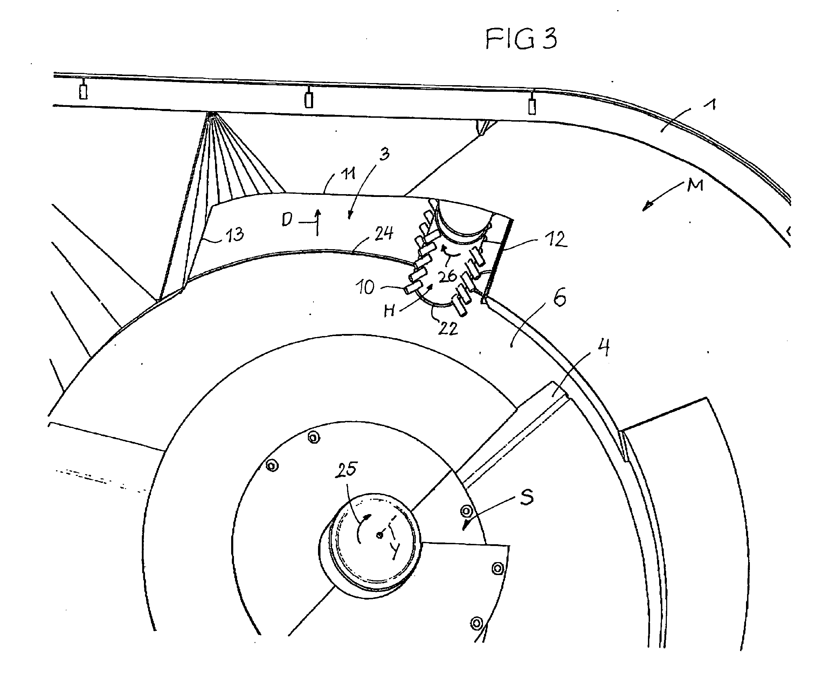

Eine Vorrichtung M in den Fig. 1 und 2 zum Mischen und Ausbringen von Mischgut wie Futter, Streugut, Dünger, Stallmist oder dgl. ist als sogenannter Mischwagen W konzipiert, der entweder selbstfahrend oder schleppergezogen ist. Ein annähernd trichterförmiger Behälter 1 weist in Fig. 1 beispielsweise eine vordere, seitliche Austragöffnung 2 auf, die offen gezeigt ist und Einblick zum Bereich einer vorderseitigen weiteren Austragöffnung 3 bietet. In der Austragöffnung 2 ist ein bodenseitiger außenliegender Teil 4 eines Mischorgans S (s. Fig. 3) zu sehen, der sich nahe oberhalb des Bodens 6 bewegt. Das Mischorgan S ist üblicherweise eine sogenannte Vertikalschnecke, die auf dem Boden 6 montiert und drehangetrieben ist.

Vor der frontseitigen Austragöffnung 3 ist ein Gehäuse 5 eines Streugebläses F als weitere Fördereinrichtung montiert, das das durch die Austragöffnung 3 gelieferte Mischgut ansaugt und durch einen nicht näher dargestellten Rüssel bläst. Von der Austragöffnung 3 erstreckt sich ein Übergabetrichter 7 in das Gehäuse 5. Im Gehäuse 5 ist ein um eine im Wesentlichen horizontale Achse drehangetriebenes Gebläserad 8 enthalten. Zwischen dem Mischorgan S bzw. dessen Teil 4 und dem Gebläserad 8 ist im Bereich der Austragöffnung 3 ein Hilfsförderglied H vorgesehen, das um eine annähemd vertikale Achse drehantreibbar ist und einen in dieser Ausführungsform annähemd walzenförmigen Grundkörper 9 mit Mitnehmerstrukturen 10 aufweist. Die Mitnehmerstrukturen 10 können von beliebiger Art sein. Gezeigt sind vom Mantel des Grundkörpers 9, der gegebenenfalls polygonal profiliert ist, abstehende Zapfen oder Zinken. Es könnten auch Schneckengänge, Abstreifer oder andere Mitnehmerstrukturen 10 vorgesehen sein, oder Kombinationen unterschiedlicher Mitnehmer.

Fig. 2 ist eine Ansicht eines Teils der Vorrichtung M von der Außenseite mit Blickrichtung schräg von oben in die Austragöffnung 3. Die Austragöffnung 3 hat einen geschwungenen oberen Rand 11 sowie erste und zweite im Wesentlichen vertikal verlaufende und gerade Offnungsränder 13 und 12. Das Mischorgan S rotiert in Fig. 2 mit einer Drehrichtung 25 im Uhrzeigersinn. Das Hilfsförderglied H wird mit der gleichen Drehrichtung 26, d.h. hier ebenfalls im Uhrzeigersinn, angetrieben, und kann in etwa gleich schnell, langsamer oder schneller laufen als das Mischorgan S. Entlang der ersten und zweiten öffnungsränder 12, 13 sind an der Außenseite des Behälters 1 Führungsschienen 14 für eine Verschlussklappe (nicht gezeigt) montiert. Das Hilfsförderglied H ist bei dieser Ausführungsform mit seiner nicht gezeigten, eine annähernd vertikale Achse X definierenden Welle in oberen und unteren Schwingen 15, 16 drehbar gelagert, die um eine gemeinsame Stellachse Z schwenkverstellbar und durch ein Verbindungsrohr 17 miteinander gekoppelt sind. Zum Schwenkverstellen der Schwingen 16, 15 ist ein Schwingen-Stellantrieb 20 vorgesehen, der stationär abgestützt ist. Der Schwingen-Stellantrieb kann im einfachsten Fall eine manuell betätigbare Schraubspindel sein, oder eine mit einem Hydromotor oder einem Elektromotor verstellbare Schraubspindel, oder zumindest ein Hydraulikzylinder.

Die Schwenkverstellbarkeit des Hilfsfördergliedes H ist ein Option. Gegebenenfalls ist das Hilfsförderglied H an einer optimalen Position nahe beim zweiten Öffnungsrand 12 nur stationär gelagert. Die Stellachse Z kann in einer stationären Halterung 18 festgelegt sein.

Auf der Schwinge 16 ist ein Antrieb 19 für das Hilfsförderglied H angeordnet, beispielsweise ein Hydraulikmotor oder ein Elektromotor. Das Hilfsförderglied H lässt sich in Richtung des Doppelpfeiles 21 hin- und herverstellen. Es könnte auch ein Antriebsstrang vom Antrieb des Mischorgans S abzweigen.

Das Hilfsförderglied H übemimmt das Mischgut vom Mischerorgan S und fördert und dosiert dieses hier für das Gebläserad 8 des Streugebläses , wobei die Förderrichtung schematisch mit T angedeutet ist.

Das Hilfsförderglied H ist in etwa so lange wie der zweite Öffnungsrand 12. Zweckmäßig ist das untere Ende des Hilfsförderglieds H so hoch gelagert, dass es gerade nicht mit dem bodenseitigen außenliegenden Teil des Mischorgans S kollidiert, wenn das Hilfsförderglied H aus der in Fig. 2 gezeigten, außenliegenden Position weiter nach innen in die Austragöffnung 3 und zum zweiten Öffnungsrand 12 hin verstellt ist und dann zumindest teilweise in den Behälter 1 eingreift.

Fig. 3 verdeutlicht eine Ausführungsform der Vorrichtung M, die zum direkten Austrag D, beispielsweise ohne eine weitere außen vor der Austragöffnung 3 angeordnete Fördereinrichtung, konzipiert ist. Es ist zu sehen, dass die Austragöffnung 3 durch ihren oberen Öffnungsrand 11 und einen unteren Öffnungsrand 24 (eine Art Übergabeschwelle) sowie durch den in Drehrichtung 25 des Mischorgans S ersten Öffnungsrand 13 und den in Drehrichtung 25 im Abstand hinter dem ersten Öffnungsrand 13 liegenden zweiten Öffnungsrand 12 definiert ist. Das Hilfsförderglied H ist benachbart zum zweiten Öffnungsrand 12 angeordnet und greift hier relativ weit in den Behälter 1. Um eine Kollision mit dem bodenseitigen, außen liegenden Teil 4 des Mischorgans S zu verhindem, liegt ein Ende 22 des Hilfsförderglieds H oberhalb des Teils 4.

Fig. 3 verdeutlicht ferner, dass das Mischorgan S und das Hilfsförderglied H mit gleichen Drehrichtungen 25, 26 angetrieben werden, so dass das vom Mischorgan S in Fig. 3 schräg nach rechts oben angelieferte Mischgut vom Hilfsförderglied H umgelenkt und schräg nach links oben durch die Austragöffnung 3 gefördert wird.

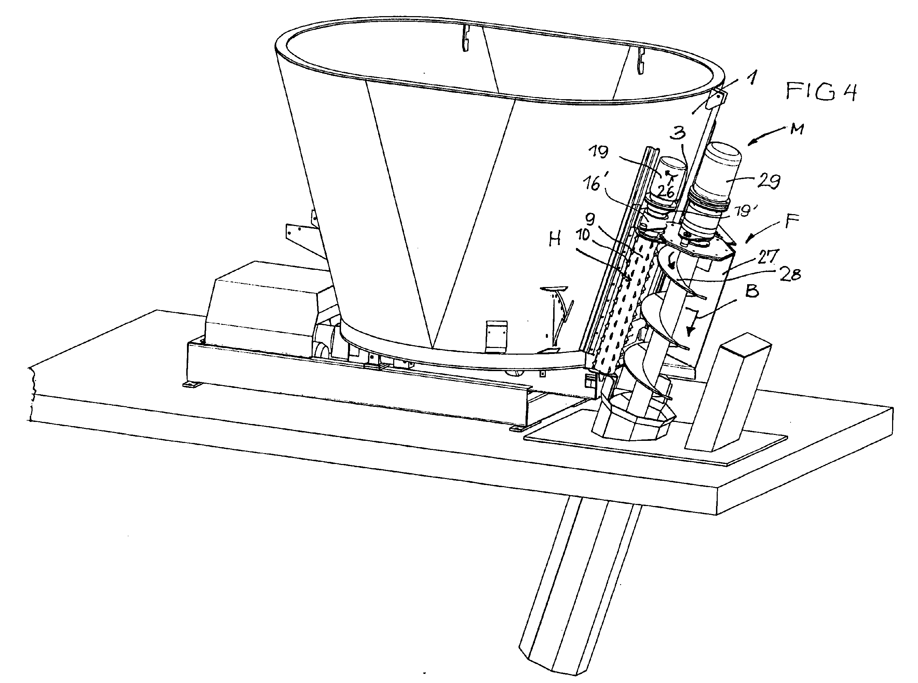

Fig. 4 deutet eine Ausführungsform der Vorrichtung M an, die im stationären Betrieb, (kein Mischwagen wie in Fig. 1) beispielsweise zum Beschicken eines Fermenters oder einer Biogas-Anlage, verwendet wird. Das im Bereich des hier nicht sichtbaren zweiten Öffnungsrandes platzierte Hilfsförderglied H liegt annähernd parallel zum zweiten Öffnungsrand und weist in dieser Ausführungsform am Grundkörper 9 dreieckige Mitnehmerstrukturen 10 auf. Das Hilfsförderglied H ist in einem Übergabetrichter stationär an einer vorbestimmten Position relativ zum zweiten Öffnungsrand angeordnet. Das Hilfsförderglied H wird vom Motor 10 über ein Getriebe 19' angetrieben, das mit einer Drehmomentstütze 16' relativ zum Behälter 1 gehalten wird. Alternativ könnte das Hilfsförderglied H wie in den vorhergehenden Figuren auch schwenkverstellbar sein.

Vor der Austragöffnung 3 ist ein rohrartiges Gehäuse 27 eines Schneckenförderers F als Fördereinrichtung angeordnet, in dem eine Förderschnecke 28 durch einen Antriebsmotor 29 angetrieben untergebracht ist. Die Förderrichtung durch die Austragöffnung 3 über das Hilfsförderglied H und in dem Schneckenförderer ist mit B angedeutet. Das in Fig. 4 nicht gezeigte Mischorgan fördert das Mischgut zum Hilfsförderglied H, wo es etwas angestaut wird, ehe es vom Hilfsförderglied H vorbei an der kritischen toten Ecke beim zweiten Öffnungsrand direkt in die Förderschnecke 28 eingebracht wird. Das Hilfsförderglied H erfüllt die Funktion eines Förderelements, eines Vorkomprimierelements und eines Dosierelements, um eine gleichmäßige und zügige Förderung des Mischguts durch die Förderschnecke 28 sicherzustellen.

Bei der in Fig. 2 gezeigten Ausführungsform der Vorrichtung M mit dem Streugebläse F kann das Hilfsförderglied H auch verwendet werden, um je nach eingestellter Schwenkstellung den Ansaugquerschnitt so einzustellen, dass das Gebläserad 8 das Mischgut, unterstützt durch das Hilfsförderglied H, effizient anzusaugen vermag.

Bei der in Fig. 3 gezeigten Ausführungsform der Vorrichtung M zum direkten Austragen ohne eine zusätzliche Fördereinrichtung an der Außenseite der Austragöffnung 3 könnte auch beim ersten Öffnungsrand 13 ein ähnliches Hilfsförderglied H vorgesehen werden, um eine noch mehr verbesserte Dosierwirkung und Verteilerwirkung zu erzielen.

Der walzenförmige Grundkörper 9, der in den Abbildungen dargestellt ist, könnte auch durch einen anderen Mitnehmerkörper mit anderer geometrischer Form ersetzt sein.

## Patentansprüche

1. Vorrichtung zum Mischen und Ausbringen von Futter, Streugut, Dünger, Stallmist oder dgl., mit einem annähernd trichterförmigen Behälter (1), in dem auf dem Boden (6) wenigstens ein um eine annähernd vertikale Mischachse (Y) drehangetriebenes Mischorgan (S) vorgesehen ist, mit wenigstens einer in der Behälterwand bodennahe angeordneten Ausgabeöffnung (3), die in Drehrichtung (25) des Mischorgans (S) mit Abstand aufeinanderfolgende erste und zweite, im Wesentlichen senkrechte Öffnungsränder (13, 12) aufweist, und mit wenigstens einem im Bereich der Ausgabeöffnung (3) angeordneten, um eine Achse (X) drehantreibbaren Hilfsförderglied (H), wobei gegebenenfalls vor der Außenseite der Ausgabeöffnung (3) eine weitere, antreibbare Fördereinrichtung (F) vorgesehen ist, **dadurch gekennzeichnet, dass** das Hilfsförderglied (H) mit annähernd vertikaler Achse (X) von der Außenseite der Ausgabeöffnung (3) her dem zweiten Öffnungsrand (12) zugeordnet ist.

2. Vorrichtung nach Anspruch 1, **dadurch gekennzeichnet, dass** das Hilfsförderglied (H) eng benachbart, vorzugsweise annähernd parallel, zum zweiten Öffnungsrand (12) platziert ist.

3. Vorrichtung nach Anspruch 1, **dadurch gekennzeichnet, dass** das Mischorgan (S) und das Hilfsförderglied (H) in gleichen Drehrichtungen (25, 26) antreibbar sind.

4. Vorrichtung nach Anspruch 1, **dadurch gekennzeichnet, dass** das Hilfsförderglied (H) einen langgestreckten, vorzugsweise walzenförmigen, Grundkörper (9) mit Mitnehmer-Strukturen (10) aufweist.

5. Vorrichtung nach Anspruch 1, **dadurch gekennzeichnet, dass** die axiale Länge des Hilfsförderglieds (H) zumindest in etwa der Länge des zweiten Öffnungsrandes (12) entspricht.

6. Vorrichtung nach Anspruch 1, **dadurch gekennzeichnet, dass** das Hilfsförderglied (H) um eine zur Achse (X) zumindest im Wesentlichen parallele, an der Außenseite der Ausgabeöffnung (3) in der Nähe des zweiten Öffnungsrandes (12) angeordnete Stellachse (Z) schwenkverstellbar ist.

7. Vorrichtung nach Anspruch 6, **dadurch gekennzeichnet, dass** das Hilfsförderglied (H) zwischen Schwenklagern außerhalb der Ausgabeöffnung (3) und Schwenklagen verstellbar ist, in denen das Hilfsförderglied (H) durch die Ausgabeöffnung (3) in den Behälter (1) eingreift.

8. Vorrichtung nach Anspruch 1, **dadurch gekennzeichnet, dass** ein unteres Ende (22) und/oder Mitnehmerstrukturen (10) des Hilfsförderglieds (H) oberhalb der Umlaufbahn eines bodenseitigen, außenliegenden Teils (4) des Mischorgans (S) angeordnet ist bzw. sind.

9. Vorrichtung nach Anspruch 1, **dadurch gekennzeichnet, dass** der Wirkdurchmesser des Hilfsförderglieds (H) zwischen etwa 20 % und 40 % der in Drehrichtung (25) des Mischorgans (S) gesehenen Innenweite der Ausgabeöffnung (3) beträgt.

10. Vorrichtung nach Anspruch 1, **dadurch gekennzeichnet, dass** das Hilfsförderglied (H) als Antrieb (19) einen Hydromotor oder einen Elektromotor, ggfs. mit einem Getriebe (19'), aufweist.

11. Vorrichtung nach Anspruch 6, **dadurch gekennzeichnet, dass** das Hilfsförderglied (H) mit einer die Achse (X) definierenden Antriebswelle in oberen und unteren Schwingen (16, 15) gelagert ist, dass an einer Schwinge der Antrieb (19) montiert ist, dass die Schwingen (15, 16) an der in der Nähe des zweiten Öffnungsrandes (12) stationär montierten Stellachse (Z) angelenkt sind, und dass zwischen wenigstens einer Schwinge (16) und einem stationären Stützlager ein Schwingen-Stellantrieb (20) eingesetzt ist.

12. Vorrichtung nach Anspruch 11, **dadurch gekennzeichnet, dass** der Schwingen-Stellantrieb (20) eine manuell oder über einen Hydro- oder Elektromotor betätigbare Stellspindel oder ein Hydraulikzylinder ist.

13. Vorrichtung nach wenigstens einem der vorhergehenden Ansprüche, **dadurch gekennzeichnet, dass** der Schwingen-Stellantrieb (20) funktionell mit dem Antrieb (19) gekoppelt ist, vorzugsweise derart, dass bei über wenigstens einen vorbestimmten Grenzwert zunehmendem Förderwiderstand das Hilfsförderglied (H) weiter in Richtung zum Mischorgan (S) hin oder von diesem weg verstellt wird.

14. Vorrichtung nach wenigstens einem der vorhergehenden Ansprüche, **dadurch gekennzeichnet, dass** das Hilfsförderglied (H) mit seinem Antrieb (19) und seiner Lagerung ein Nachrüst-Bausatz ist.

15. Vorrichtung nach wenigstens einem der vorhergehenden Ansprüche, **dadurch gekennzeichnet, dass** das Hilfsförderglied (H) eine Ausgabe- und Dosierstufe der für direkt Austrag (D) ausgebildeten Vorrichtung (M) ist.

16. Vorrichtung nach wenigstens einem der Ansprüche 1 bis 14, **dadurch gekennzeichnet, dass** das Hilfsförderglied (H) eine Übergabe- und Dosierstufe der mit einem Streugebläse (5) ausgebildeten Vorrichtung (M) ist.

17. Vorrichtung nach wenigstens einem der Ansprüche 1 bis 14, **dadurch gekennzeichnet, dass** das Hilfsförderglied (H) eine Übergabe- und Kompressionsstufe der mit einem Schneckenförderer ausgebildeten Vorrichtung (M) ist.
